Europäisches Patentamt

European Patent Office

Office européen des brevets

(11) Veröffentlichungsnummer: **0 539 914 A1**

## (12) EUROPÄISCHE PATENTANMELDUNG

(21) Anmeldenummer: **92118324.0**

(22) Anmeldetag: **27.10.92**

(51) Int. Cl.5: **G02B 13/22**, G02B 13/14, G02B 15/173

(30) Priorität: **30.10.91 DE 4135683**

(43) Veröffentlichungstag der Anmeldung:
**05.05.93 Patentblatt 93/18**

(84) Benannte Vertragsstaaten:
**DE FR GB**

(71) Anmelder: **Firma Carl Zeiss**

**W−7920 Heidenheim (Brenz)(DE)**
(84) **DE FR**

(71) Anmelder: **CARL−ZEISS−STIFTUNG, HANDELND ALS CARL ZEISS**

**W−7920 Heidenheim an der Brenz(DE)**
(84) **GB**

(72) Erfinder: **Henneberg, Peter, Dr.**
**Mantelhofer Weg 21**
**W−7080 Aalen(DE)**

(54) **Pankratisches afokales System mit achromatischer und athermaler Eigenschaft im infraroten Wellenlängenbereich.**

(57) Für ein pankratisches Afokal (Zoom−Strahlaufweiter) wurde ein dreilinsiges Hauptobjektiv (7,8,9) unter Einsatz von Materialien mit speziellen Eigenschaften berechnet, das chromatisch und thermisch korrigiert ist. Es kann im infraroten Spektralbereich von 10,8μ bis 10,4μ und im Temperaturbereich von −40°C bis +70°C benutzt werden, ohne daß eine aktive Kompensation der Drifteffekte vorgenommen werden muß.

FIG.1a

FIG.1b

Rank Xerox (UK) Business Services
(3.10/3.6/3.3.1)

Die Erfindung betrifft ein pankratisches afokales System für den infraroten Wellenlängenbereich, das – in umgekehrter Richtung der auftreffenden Strahlung gezählt – aus einem feststehenden Linsenglied, zwei Verschiebegliedern und einem weiteren feststehenden, als Hauptobjektiv wirkenden Linsenglied besteht.

In der DE 36 25 128 Al ist ein derartiges pankratisches afokales System als Vario-Objektiv für den infraroten Wellenlängenbereich beschrieben. Dieses bekannte pankratische afokale System hat eine Einzellinse als Hauptobjektiv. Es ist nicht optimal achromatisiert und nicht auf thermische Effekte korrigiert.

Der Erfindung liegt die Aufgabe zugrunde, dieses vorbekannte pankratische System weiterzuentwickeln, so daß es für Betriebswellenlängen im Bereich von $10,8\mu$ bis $10,4\mu$ achromatisiert ist und für seinen thermischen Arbeitsbereich, der zwischen $-40°C$ und $+70°C$ liegt, athermale Eigenschaften hat. Dies hat zum Ziel, daß bei seinem Einsatz innerhalb des genannten Temperaturbereiches eine aktive Kompensation der homogenen Temperatureffekte nicht notwendig sein soll. Ein derartiges, im folgenden "achrathermes" System genannt, soll sich demnach dadurch auszeichnen, daß es in einem vorgegebenen Spektral- und Temperaturbereich ohne aktive Kompensation der Drifteffekte benutzt werden kann.

Diese Aufgabe wird erfindungsgemäß gelöst durch ein optisches System mit den in Tabelle 1 wiedergegebenen optischen Daten:

Tabelle 1

| Flächen-Nr. | Radius (mm) | Dicke (mm) | Linsen-Nr. | Material |
|---|---|---|---|---|
| $R_2$ | 33.98 | 1.50 | 1 | ZnSe |
| $R_3$ | $-70.29$ | 32.09 | | |
| $R_5$ | 70.29 | 1.50 | 2 | ZnSe |
| $R_6$ | $-33.98$ | 23.66 | | |
| $R_8$ | 7.61 | 2.00 | 3 | ZnSe |
| $R_9$ | 19.25 | 23.87 | Pos. 1 | |
| | | 38.00 | Pos. 2 | |
| $R_{10}$ | $-44.03$ | 4.50 | 4 | GaAs |
| $R_{11}$ | $-34.23$ | 1.00 | | |
| $R_{12}$ | $-149.62$ | 3.00 | 5 | ZnSe |
| $R_{13}$ | $-60.00$ | 43.92 | Pos. 1 | |
| | | 141.53 | Pos. 2 | |
| $R_{14}$ | $-49.76$ | 2.00 | 6 | ZnSe |
| $R_{15}$ | 122.32 | 119.70 | Pos. 1 | |
| | | 7.96 | Pos. 2 | |
| $R_{16}$ | $-254.83$ | 3.80 | 7 | ZnSe |
| $R_{17}$ | 330.18 | 0.90 | | |
| $R_{18}$ | 437.14 | 6.00 | 8 | Amtir 3 |
| $R_{19}$ | $-120.57$ | 0.5 | | |
| $R_{20}$ | $-3162.30$ | 4.60 | 9 | Ge |
| $R_{21}$ | Plan | | | |

In der Datentabelle sind als Linsen-Nr. 1 und 2 ein dem eigentlichen Pankraten vorgesetzter Pupillenversetzer mit der Vergrößerung $\Gamma = 1.0$ bezeichnet. Der Pankrat besteht aus den feststehenden Linsengliedern (3;7,8,9) und den Schiebegliedern (4,5;6). Der Pankrat erlaubt eine Variation der Vergrößerung von $\Gamma = 0,034$ bis $\Gamma = 1,124$.

Der Durchmesser $\phi$ seiner Austrittspupille AP bei $\Gamma = 0,034$ beträgt:

$\phi = 50mm$.

Die mittlere Betriebswellenlänge $\lambda_0$ für das System beträgt:

$\lambda_0 = 10,6\mu$.

Da Frequenzschwankungen der Quelle im Bereich

$\Delta\lambda = 10,8\mu - 10,4\mu$

liegen können, ist eine Achromatisierung mindestens in diesem Frequenzbereich erforderlich.

Die der Auslegung des optischen Systems zugrundeliegenden optischen und thermischen Materialeigenschaften für die Linsen sind in der Tabelle 2 angegeben. Für mechanische Fassungen und Führungen bietet sich als Material Aluminium an.

## Tabelle 2:

| Material | Brechzahlen bei T = 20°C | | | $\frac{1}{l}dl/dT \times 10^{+6}$ | $dn/dT \times 10^{+6}$ |
|---|---|---|---|---|---|
| | $\lambda=10.6\mu$ | $\lambda=10.8\mu$ | $\lambda=10.4\mu$ | | |
| ZnSe | 2.40280 | 2.40150 | 2.40410 | 7.6 | 64.0 |
| GaAs | 3.27660 | 3.27540 | 3.27780 | 5.7 | 150.0 |
| Amtir 3 | 2.60106 | 2.60018 | 2.60186 | 15.0 | 56.0 |
| Ge | 4.00482 | 4.00466 | 4.00496 | 6.0 | 400.0 |
| Al | | | | 24.0 | |

In der Tabelle 3 sind die Teilbrennweiten des Hauptobjektives mit den Linsen (7,8,9) angegeben.

Tabelle 3

| Linse | Teilbrennweiten (mm) | Material |
|---|---|---|
| 7 | − 102 | ZnSe |
| 8 | + 59 | Amtir 3 |
| 9 | − 1053 | Ge |

Um die Linsenzahl im System möglichst klein zu halten, wurde beim Pankraten strenge Achromasie und athermale Korrektur zunächst nur für die kritische Vergrößerung $\Gamma$ = 0.034 angestrebt. Die sich dann bei den übrigen Systemvergrößerungen bis $\Gamma$ = 1.124 ergebenden chromatischen und thermischen Eigenschaften wurden kontrolliert verfolgt und auf ihre Zulässigkeit bezüglich der optischen Spezifikation überprüft. Das so ausgelegte pankratische System wird als "achratherm" bezeichnet.

Die mit der Erfindung erzielten Vorteile bestehen insbesondere darin, daß das pankratische System im angegebenen Spektral− und Temperaturbereich ohne aktive Kompensation der Drifteffekte, etwa durch Nachstellen von Teilkomponenten, benutzt werden kann.

Ein Ausführungsbeispiel der Erfindung ist in der Zeichnung dargestellt und wird im folgenden näher beschrieben.

Es zeigen

Fig. 1a) und 1b)    eine schematische Schnittdarstellung des erfindungsgemäßen pankratischen Systems;

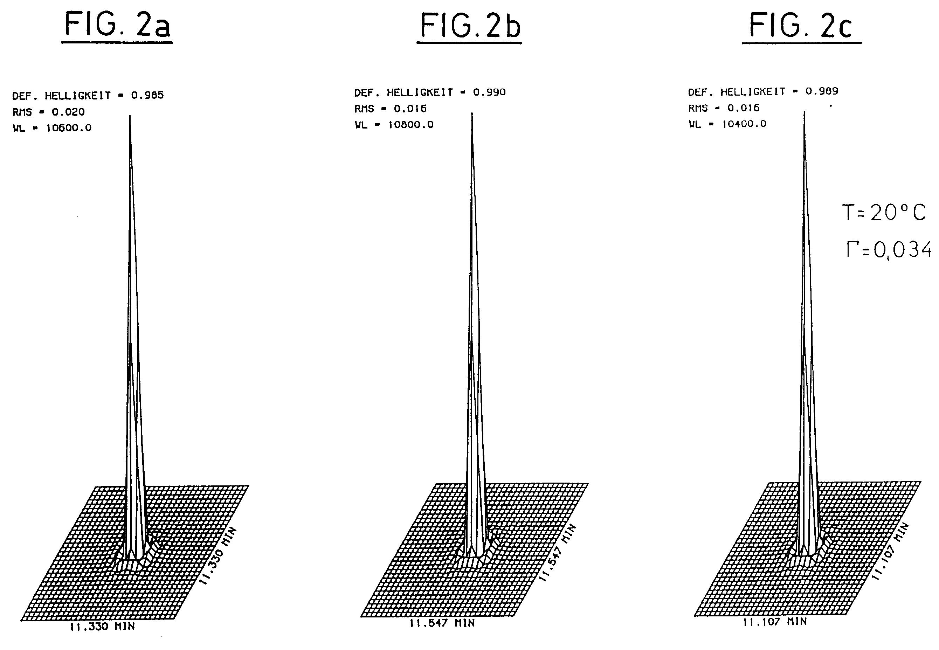

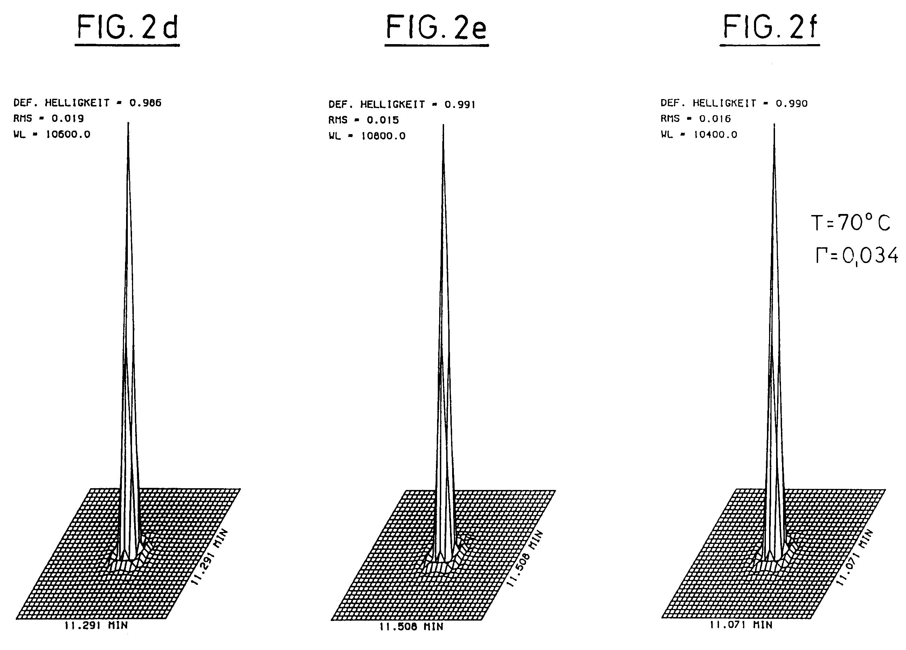

Fig. 2a) bis 2c)    die point spread functions (PSF) des in Fig. 1a,b) dargestellten Systems für die Temperatur T = 20˚C und die Vergrößerung $\Gamma$ = 0,034.

Fig. 2d) bis 2f)    die point spread functions (PSF) des in Fig. 1a,b) dargestellten Systems für die Temperatur T = 70˚C und die Vergrößerung $\Gamma$ = 0,034.

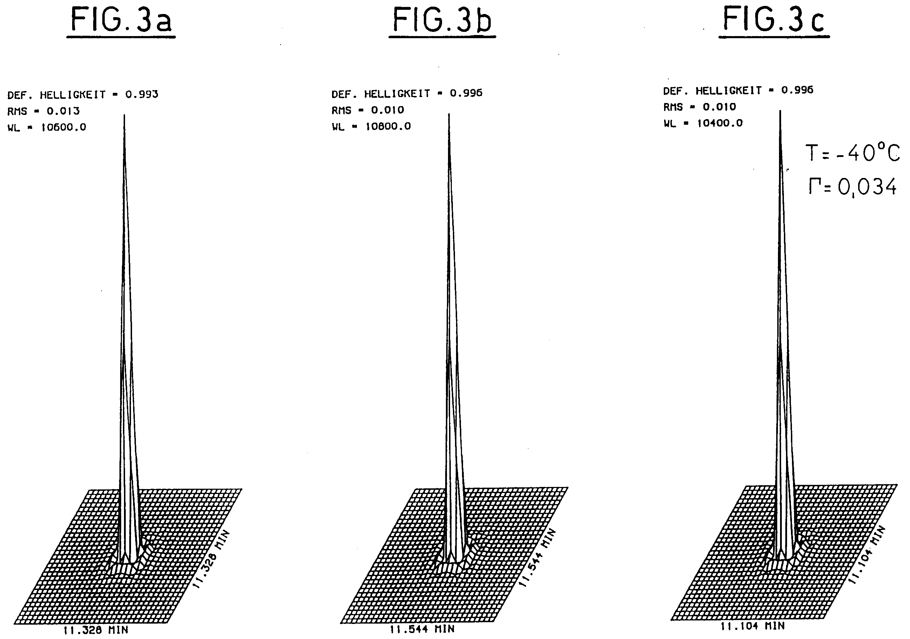

Fig. 3a) bis 3c)    die point spread functions (PSF) des in Fig. 1a,b) dargestellten Systems für die Temperatur T = −40˚C und die Vergrößerung $\Gamma$ = 0,034.

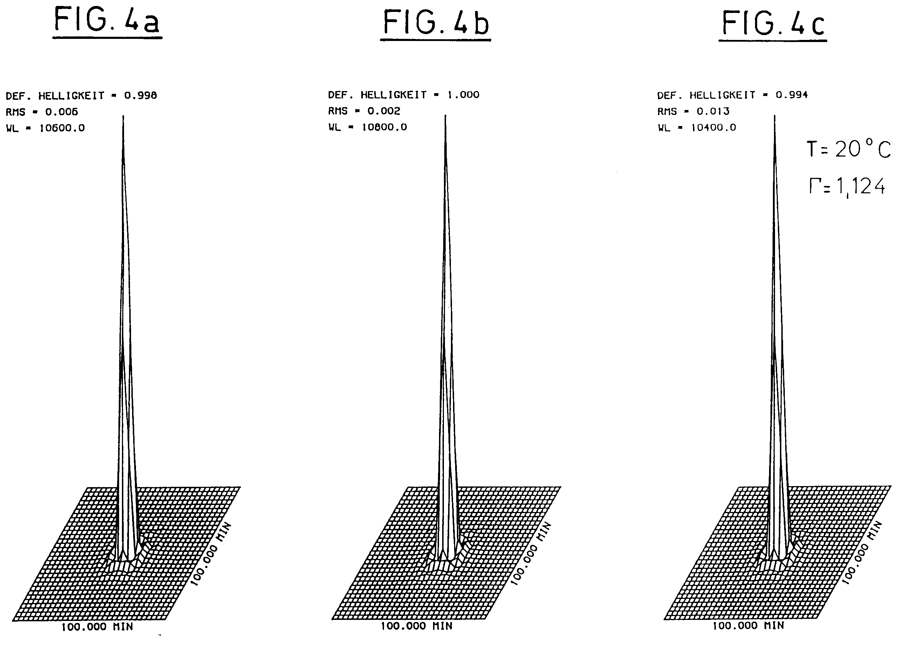

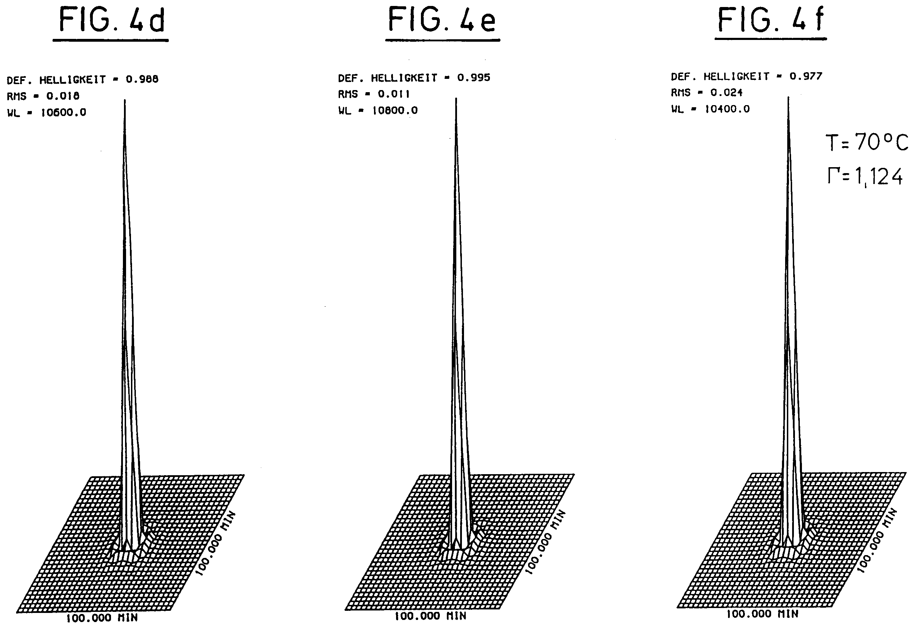

Fig. 4a) bis 4c)    die point spread functions (PSF) des in Fig. 1a,b) dargestellten Systems für die Temperatur T = 20˚C und die Vergrößerung $\Gamma$ = 1,124.

Fig. 4d) bis 4f)    die point spread functions (PSF) des in Fig. 1a,b) dargestellten Systems für die Temperatur T = 70˚C und die Vergrößerung $\Gamma$ = 1.124 jeweils für das in Fig. 1 dargestellte pankratische System.

Fig. 5a) bis 5c)    die point spread functions (PSF) für ein pankratisches System nach dem genannten Stand der Technik für die Temperatur T = 20°C und die Vergrößerung Γ = 0,03.

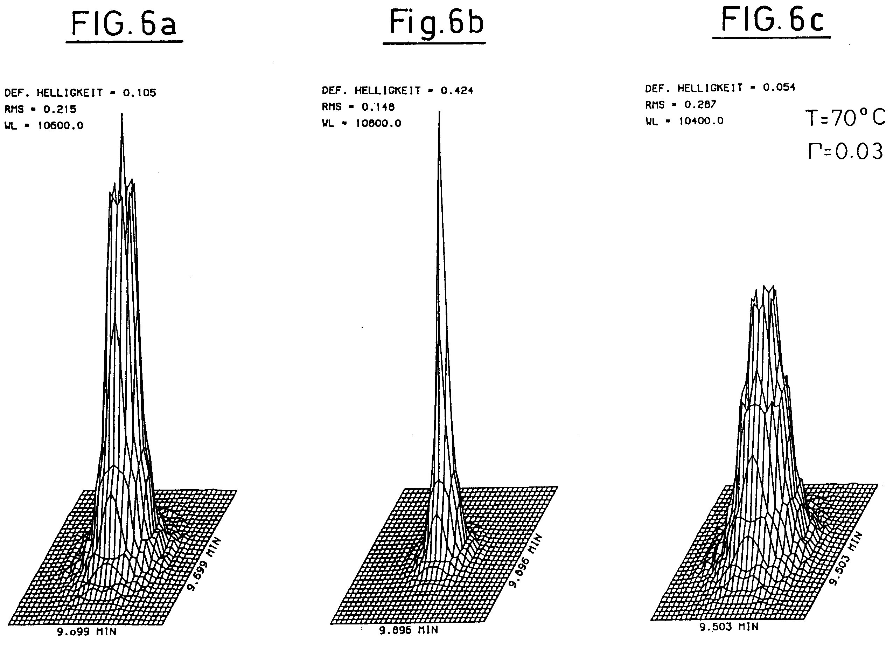

Fig. 6a) bis 6c)     die point spread functions (PSF) für ein pankratisches System nach dem genannten Stand der Technik für die Temperatur T = 70°C und die Vergrößerung Γ = 0,03.

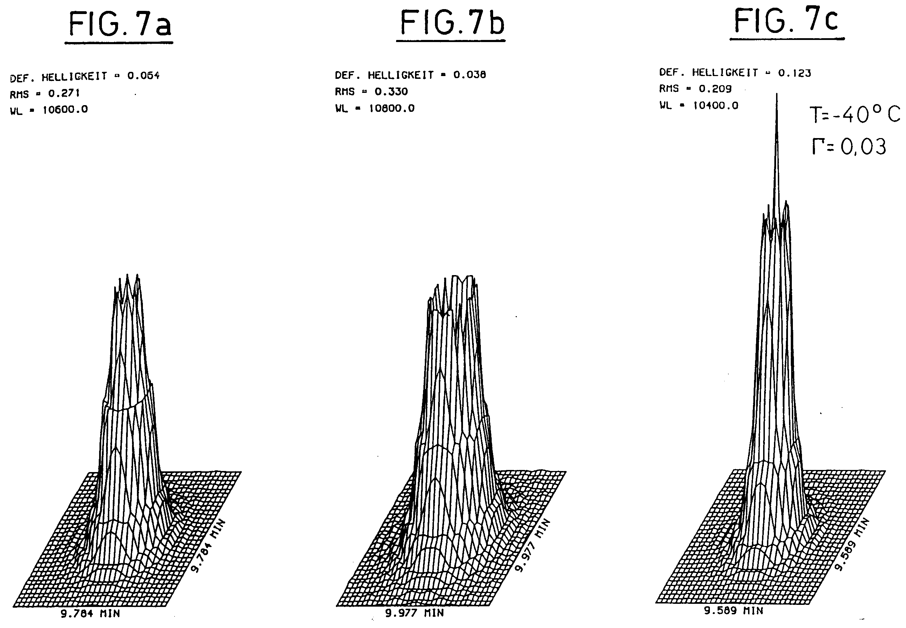

Fig. 7a) bis 7c)     die point spread functions (PSF) für ein pankratisches System nach dem genannten Stand der Technik für die Temperatur T = −40°C und die Vergrößerung Γ = 0,03.

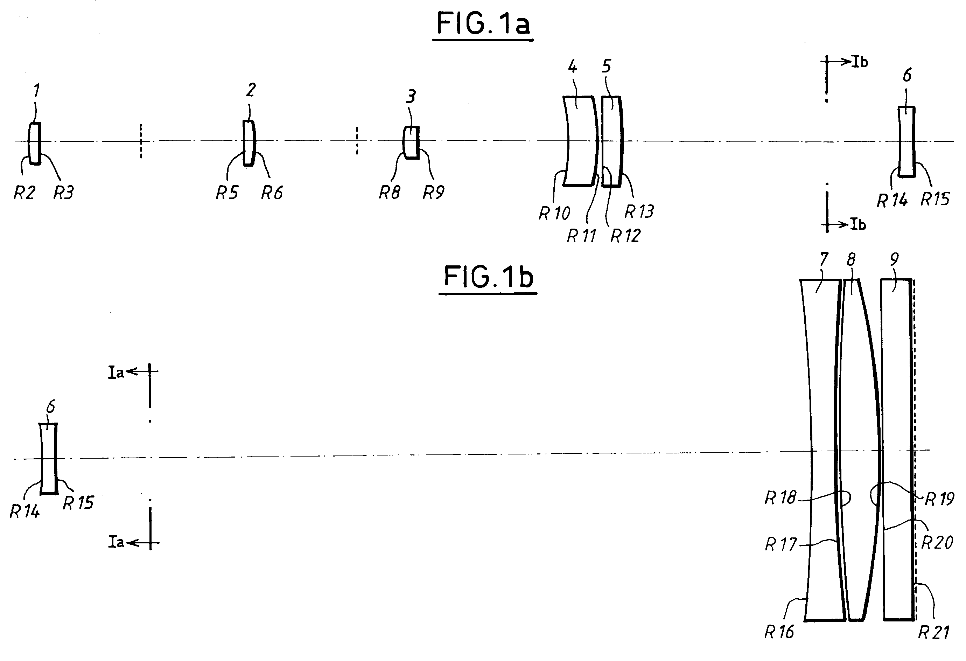

In der Darstellung der Figuren 1a) und 1b) sind für die Einzelkomponenten des pankratischen Systems die gleichen Bezeichnungen gewählt wie in der Tabelle 1. Die gezeigten point spread functions (PSF) für das der Fig. 1 zugrundeliegende pankratische System lassen erkennen, daß in den zwischen $\Gamma_1$ = 0,034 und $\Gamma_2$ = 1,124 liegenden Vergrößerungen die RMS − Werte von 0,035 λ nicht überschritten werden.

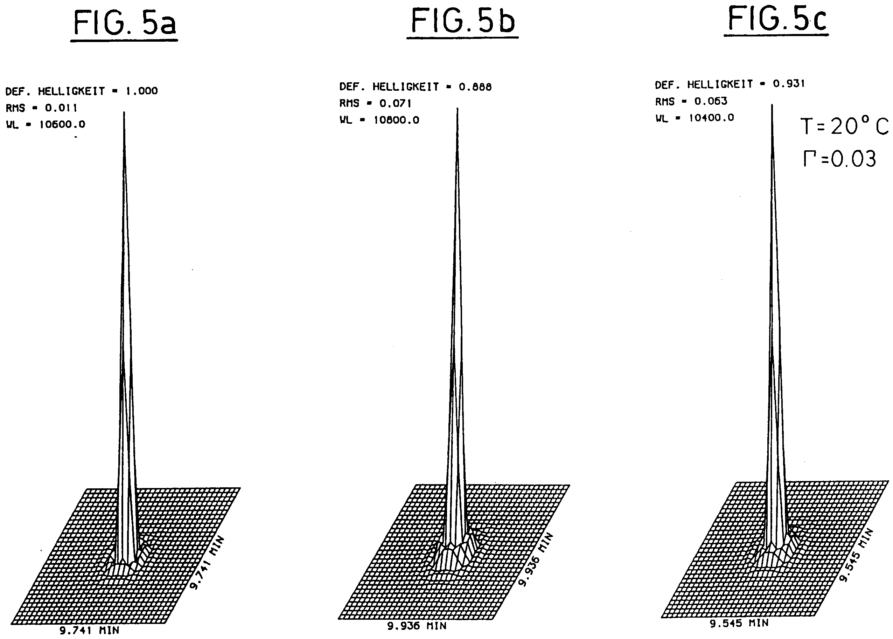

Im Gegensatz dazu zeigen die in den Figuren 5a) bis 5c), 6a) bis 6c) und 7a) bis 7c) gezeigten point spread functions (PSF), daß das aus dem Stand der Technik bekannte pankratische System weder optimal achromatisiert noch athermal ausgelegt ist.

**Patentansprüche**

1.  Pankratisches afokales System für den infraroten Wellenlängenbereich, das − in umgekehrter Richtung der auftreffenden Strahlung gezählt − aus einem feststehenden Linsenglied (3), zwei Verschiebeglie − dern (4,5;6) und einem weiteren feststehenden, als Hauptobjektiv wirkenden Linsenglied besteht, dadurch gekennzeichnet, daß das Hauptobjektiv als dreilinsige Baugruppe (7,8,9) ausgelegt ist und das gesamte optische System folgende Daten aufweist:

Tabelle 1

| Flächen − Nr. | Radius (mm) | Dicke (mm) | Linsen − Nr. | Material |
|---|---|---|---|---|
| $R_2$ | 33.98 | 1.50 | 1 | ZnSe |
| $R_3$ | − 70.29 | 32.09 | | |
| $R_5$ | 70.29 | 1.50 | 2 | ZnSe |
| $R_6$ | − 33.98 | 23.66 | | |
| $R_8$ | 7.61 | 2.00 | 3 | ZnSe |
| $R_9$ | 19.25 | 23.87 | Pos. 1 | |
| | | 38.00 | Pos. 2 | |
| $R_{10}$ | − 44.03 | 4.50 | 4 | GaAs |
| $R_{11}$ | − 34.23 | 1.00 | | |
| $R_{12}$ | − 149.62 | 3.00 | 5 | ZnSe |
| $R_{13}$ | − 60.00 | 43.92 | Pos. 1 | |
| | | 141.53 | Pos. 2 | |
| $R_{14}$ | − 49.76 | 2.00 | 6 | ZnSe |
| $R_{15}$ | 122.32 | 119.70 | Pos. 1 | |
| | | 7.96 | Pos. 2 | |
| $R_{16}$ | − 254.83 | 3.80 | 7 | ZnSe |
| $R_{17}$ | 330.18 | 0.90 | | |
| $R_{18}$ | 437.14 | 6.00 | 8 | Amtir 3 |
| $R_{19}$ | − 120.57 | 0.5 | | |
| $R_{20}$ | − 3162.30 | 4.60 | 9 | Ge |
| $R_{21}$ | Plan | | | |

2.  Pankratisches afokales System nach Anspruch 1, dadurch gekennzeichnet, daß es für Aufweitungste − leskope (Keppler − Fernrohre) von $CO_2$ − Laser − Scannern verwendet wird.

# FIG.1a

1
R2 R3

2
R5 R6

3
R8 R9

4 5
R10 R11 R12 R13

→ Ib

6
R14 R15

# FIG.1b

Ia→

Ia→

6
R14 R15

→ Ib

9
R19 R20 R21

7 8
R18 R17 R16

EP 0 539 914 A1

## FIG. 2a

DEF. HELLIGKEIT = 0.985
RMS = 0.020
WL = 10600.0

11.330 MIN

11.330 MIN

## FIG. 2b

DEF. HELLIGKEIT = 0.990
RMS = 0.016
WL = 10800.0

11.547 MIN

11.547 MIN

## FIG. 2c

DEF. HELLIGKEIT = 0.989
RMS = 0.016
WL = 10400.0

$T = 20°C$
$\Gamma = 0{,}034$

11.107 MIN

11.107 MIN

## FIG.2d

DEF. HELLIGKEIT = 0.986
RMS = 0.019
WL = 10600.0

11.291 MIN

## FIG.2e

DEF. HELLIGKEIT = 0.991
RMS = 0.015
WL = 10800.0

11.506 MIN

## FIG.2f

DEF. HELLIGKEIT = 0.990
RMS = 0.016
WL = 10400.0

T=70°C
Γ=0,034

11.071 MIN

## FIG.3a

DEF. HELLIGKEIT = 0.993
RMS = 0.013
WL = 10600.0

11.328 MIN

11.328 MIN

## FIG.3b

DEF. HELLIGKEIT = 0.996
RMS = 0.010
WL = 10800.0

11.544 MIN

11.544 MIN

## FIG.3c

DEF. HELLIGKEIT = 0.996
RMS = 0.010
WL = 10400.0

$T = -40°C$

$\Gamma = 0{,}034$

11.104 MIN

11.104 MIN

EP 0 539 914 A1

## FIG. 4a

DEF. HELLIGKEIT = 0.998
RMS = 0.005
WL = 10600.0

## FIG. 4b

DEF. HELLIGKEIT = 1.000
RMS = 0.002
WL = 10800.0

## FIG. 4c

DEF. HELLIGKEIT = 0.994
RMS = 0.013
WL = 10400.0

T = 20 °C

Γ = 1,124

100.000 MIN

100.000 MIN

100.000 MIN

100.000 MIN

100.000 MIN

100.000 MIN

## FIG. 4d

DEF. HELLIGKEIT = 0.988
RMS = 0.018
WL = 10600.0

## FIG. 4e

DEF. HELLIGKEIT = 0.995
RMS = 0.011
WL = 10800.0

## FIG. 4f

DEF. HELLIGKEIT = 0.977
RMS = 0.024
WL = 10400.0

$T = 70\,°C$

$\Gamma = 1{,}124$

100.000 MIN

100.000 MIN

100.000 MIN

100.000 MIN

100.000 MIN

100.000 MIN

EP 0 539 914 A1

## FIG. 5a

DEF. HELLIGKEIT = 1.000
RMS = 0.011
WL = 10600.0

9.741 MIN

9.741 MIN

## FIG. 5b

DEF. HELLIGKEIT = 0.888
RMS = 0.071
WL = 10800.0

9.936 MIN

9.936 MIN

## FIG. 5c

DEF. HELLIGKEIT = 0.931
RMS = 0.063
WL = 10400.0

$T = 20°C$
$\Gamma = 0.03$

9.545 MIN

9.545 MIN

EP 0 539 914 A1

## FIG.6a

DEF. HELLIGKEIT = 0.105
RMS = 0.215
WL = 10600.0

9.099 MIN

9.699 MIN

## Fig.6b

DEF. HELLIGKEIT = 0.424
RMS = 0.148
WL = 10800.0

9.896 MIN

9.896 MIN

## FIG.6c

DEF. HELLIGKEIT = 0.054
RMS = 0.287
WL = 10400.0

$T = 70°C$

$\Gamma = 0.03$

9.503 MIN

9.503 MIN

EP 0 539 914 A1

# FIG. 7a

DEF. HELLIGKEIT = 0.064
RMS = 0.271
WL = 10600.0

# FIG. 7b

DEF. HELLIGKEIT = 0.038
RMS = 0.330
WL = 10800.0

# FIG. 7c

DEF. HELLIGKEIT = 0.123
RMS = 0.209
WL = 10400.0

$T = -40°C$

$\Gamma = 0,03$

9.784 MIN

9.977 MIN

9.589 MIN

EP 0 539 914 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A,D | DE-A-3 625 128 (CARL ZEISS)<br>* Spalte 2; Abbildungen 2-4 *<br>--- | 1,2 | G02B13/22<br>G02B13/14<br>G02B15/173 |
| A | EP-A-0 171 903 (PILKINGTON P.E.)<br>* Seite 4 - Seite 5; Abbildungen 4,8,10 *<br>--- | 1,2 | |
| A | GB-A-2 138 591 (BARR & STROUD)<br>* Seite 1, Zeile 11 - Zeile 55; Abbildung *<br>--- | 1 | |
| A | US-A-4 249 793 (UEHARA)<br>* Spalte 2, Zeile 63 - Spalte 4, Zeile 30; Abbildung 2 *<br>----- | 1 | |

**RECHERCHIERTE SACHGEBIETE (Int. Cl.5 )**

G02B

Der vorliegende Recherchenbericht wurde für alle Patentansprüche erstellt

| Recherchenort | Abschlußdatum der Recherche | Prüfer |
|---|---|---|
| BERLIN | 19 JANUAR 1993 | VONMOERS F. |